# EUROPÄISCHE PATENTSCHRIFT

(11) **EP 3 623 217 B1**
(45) Veröffentlichungstag und Bekanntmachung des Hinweises auf die Patenterteilung: **07.06.2023**
(21) Anmeldenummer: 19195626.7
(22) Anmeldetag: 05.09.2019
(51) Int. Cl.: B60P 1/56, F16K 1/22, F16K 31/52, F16K 31/54, B65D 90/62

(54) **AUSLAUFEINRICHTUNG MIT EINEM ELEKTROMECHANISCHEN ANTRIEB**
DISCHARGE DEVICE WITH AN ELECTROMECHANICAL DRIVE
DISPOSITIF D'ÉCOULEMENT À ENTRAÎNEMENT ÉLECTROMÉCANIQUE

(30) Priorität: 10.09.2018 DE 202018105168 U
(43) Veröffentlichungstag der Anmeldung: 18.03.2020
(73) Patentinhaber: Feldbinder Spezialfahrzeugwerke GmbH, 21423 Winsen/Luhe (DE)
(72) Erfinder: KLEY, Wolf-Dietrich, 21423 Winsen (Luhe) (DE)
(74) Vertreter: RGTH

(56) Entgegenhaltungen:
- EP-A1- 1 102 052
- EP-A1- 1 122 473
- WO-A2-2004/096604
- DE-A1-102011 002 551
- DE-C2- 2 365 140
- DE-U1- 29 800 748
- US-A- 5 655 683

## Beschreibung

Die Erfindung betrifft eine Auslaufeinrichtung für einen Auslaufstutzen eines Behälters für ein flüssiges, staubförmiges oder körniges Füllgut sowie ein angetriebenes oder antriebsloses Fahrzeug.

### Stand der Technik

Zum Transportieren von, beispielsweise rieselfähigem, Schüttgut werden üblicherweise Silofahrzeuge eingesetzt. Derartige Fahrzeuge weisen einen Behälter zum Aufnehmen des Schüttguts auf, welches über eine Einfüllöffnung in den Behälter eingebracht wird. An einer dem Untergrund des Silofahrzeugs zugewandten Seite geht der Behälter üblicherweise in einen Auslaufstutzen über. Mit Hilfe des Auslaufstutzens kann der Behälter entleert werden. Der Auslaufstutzen kann durch ein Ventil in eine Schließstellung oder eine geöffnete Stellung gebracht werden.

Die DE 23 65 140 C2 beschreibt eine Schließvorrichtung zum Verschließen eines trichterförmigen Transportkübels. Die Schließvorrichtung besteht aus zwei Segmenten, die über Gelenkstäbe und einen Hebel von einer elektromotorischen Verstellvorrichtung geöffnet und geschlossen werden können. Die Verstellvorrichtung besteht aus einem Elektromotor, dessen Rotationsbewegung mittels eines Schraubentriebs in eine lineare Bewegung zum Betätigen des Hebels umgewandelt wird. Des Weiteren sind elektrische Stellantriebe bekannt, welche das Ventil öffnen oder schließen können.

Aus der DE 10 2011 002551 A1 ist eine Auslaufvorrichtung für Transportfahrzeuge bekannt. An einer Mantelfläche eines Abgaberohrs ist eine verschließbare Auslauföffnung vorgesehen, welche in Form einer Klappe durch einen pneumatischen Zylinder geöffnet oder geschlossen werden kann. Eine Verstellstange des pneumatischen Zylinders ist indirekt über verschwenkbare Schließhaken mit der Klappe verbunden, sodass die Klappe in der Schließstellung über die Schließhaken arretierbar ist.

Die bereits bekannten Lösungen zum Steuern des Ventils sind aufgrund einer langen Kraftübertragung durch ein Getriebe unpräzise bei der Steuerung der Ventilstellung. Derartige Antriebe zur Steuerung der Ventilstellung sind aufgrund ihrer Größe häufig mit dem Auslaufstutzen und dem Behälter mechanisch verbunden, sodass ein Austausch oder eine Montage des Ventils mit hohem Aufwand verbunden ist.

In der DE 298 00 748 U1 wird ein Transportfahrzeug für Schüttgut mit einem Silobehälter beschrieben. Bodenseitig ist eine Auslassöffnung mit einem ersten Absperrorgan vorgesehen. Das Schüttgut kann mittels eines Ausblasrohrs entlang einer Horizontalrichtung gefördert werden. Die EP 1 102 052 A1 beschreibt ein Klappenventil für Kraftwerke mit einem Drehmomentbegrenzer, welcher eine Beschädigung der Ventilklappe im Betrieb verhindern soll. Der Antriebsmotor ist als ein Servomotor ausgeführt, der den Drehmomentbegrenzer umfasst.

### Offenbarung der Erfindung: Aufgabe, Lösung, Vorteile

Der Erfindung liegt die Aufgabe zugrunde, eine schnell auf Benutzereingaben ansprechende Auslaufeinrichtung und ein Fahrzeug mit einer Auslaufeinrichtung zu schaffen, die eine Ventilstellung präzise einstellen kann und einen geringen Montageaufwand aufweist.

Diese Aufgabe wird durch die im Anspruch 1 oder die im Anspruch 7 angegebenen Merkmale gelöst. Weitere vorteilhafte Ausgestaltungen der Erfindung sind in den Unteransprüchen beschrieben.

Gemäß einem Aspekt der Erfindung wird eine Auslaufeinrichtung für einen Auslaufstutzen eines Behälters für ein flüssiges, staubförmiges oder körniges Füllgut bereitgestellt. Die Auslaufeinrichtung weist ein Ventil mit einem Ventilkörper auf, welcher mit dem Auslaufstutzen verbindbar ist. Eine Ventilklappe des Ventils dient zum Verschließen einer Auslauföffnung des Ventilkörpers. Die Auslaufeinrichtung weist mindestens einen elektromechanischen auf, wobei eine Stellung der Ventilklappe durch den elektromechanischen Antrieb über eine Kraftübertragungseinheit veränderbar ist, wobei der elektromechanische Antrieb über die Kraftübertragungseinheit mit einer Drehachse der Ventilklappe verbunden ist. Hierdurch kann die Steuerung der Ventilklappenstellung besonders schnell auf Eingaben eines Benutzers ansprechen.

Erfindungsgemäß weist die Auslaufeinrichtung eine mit dem Ventilkörper verbindbare Halteeinheit zum Aufnehmen des elektromechanischen Antriebs auf. Die Kraftübertragungseinheit ist als ein Hebel ausgestaltet, wobei der elektromechanische Antrieb einseitig schwenkbar an der Halteeinheit und einseitig mit dem Hebel verbunden ist.

Hierdurch kann eine unmittelbare und lineare Kraftübertragung von dem als ein Linearmotor ausgeführten Antrieb auf die Ventilklappe übertragen werden. Eine derartige Kraftübertragung kann ohne Verzögerungen ausgeführt werden und somit in einer direkten Bewegung der Ventilklappe resultieren. Hierdurch kann ein Massenfluss des Füllguts präzise gesteuert werden. Über eine Länge des Hebels kann die Kraft, welche auf die Ventilklappe durch den Antrieb übertragen wird, eingestellt werden.

Der Hebel kann besonders effizient betätigt werden, wenn der elektromechanische Antrieb einseitig schwenkbar an der Halteeinheit und einseitig mit dem Hebel verbunden ist. Abhängig von der Anordnung des Hebels an der Drehachse bzw. der Welle der Ventilklappe wird ein radialer Abstand zwischen der Drehachse und einer Wirkachse des Antriebs verändert. Damit der elektromechanische Antrieb einen optimalen Wirkwinkel auf den Hebel entlang eines vollständigen Stellbereichs der Ventilklappe aufweist, ist die schwenkbare Anordnung des Antriebs an der Halteeinheit vorteilhaft.

Erfindungsgemäß kann ein Drehen der Drehachse dazu führen, dass die Ventilkappe im Ventilkörper verdreht wird und somit eine Auslauföffnung des Ventilkörpers öffnet oder verschließt.

Der elektromechanische Antrieb ist über die Halteeinheit unmittelbar mit dem Ventilkörper verbunden und benötigt somit keine weiteren Verbindungsabschnitte am Behälter. Hierdurch kann die Auslaufeinrichtung mit geringem Aufwand an einem Auslaufstutzen des Behälters befestigt werden, wobei weitere mechanische Montageschritte entfallen können. Eine derartige Auslaufeinrichtung kann besonders kompakt ausgeführt sein, da das Ventil, die Halteeinheit, die Kraftübertragungseinheit und der elektromechanische Antrieb als eine zusammenhängende Einheit bzw. Baugruppe ausgebildet sein können. Der Ventilkörper kann vorzugsweise die Basis für die Auslaufeinrichtung bilden und mit einem Auslaufstutzen des Behälters verbindbar sein.

Die Kraftübertragungseinheit kann vorzugsweise eine direkte mechanische Kopplung zwischen dem elektromechanischen Antrieb und der Ventilklappe aufweisen, wodurch eine Ansteuerung des elektromechanischen Antriebs in einer unmittelbaren Bewegung bzw. Stellungsänderung der Ventilklappe resultiert. Hierdurch kann eine Verzögerungszeit, welche aufgrund einer Getriebeübersetzung entstehen kann, entfallen. Das Ventil kann somit präziser eingestellt werden und schneller reagieren.

Der elektromechanische Antrieb kann besonders flexibel an dem Ventilkörper befestigt werden, wenn die Halteeinheit einteilig oder mehrteilig ausgebildet ist. Die Halteeinheit kann an einem Abschnitt des Ventilkörpers anbringbar sein, wobei der Abschnitt vorzugsweise im Bereich der Ventilklappe ausgebildet ist, sodass lange Kraftübertragungswege vermieden werden.

Eine mehrteilig ausgebildete Halteeinheit kann beispielsweise mehrere Blechabschnitte aufweisen, die eine Verbindung zwischen dem Aufnahmeabschnitt des Ventilkörpers und dem elektromechanischen Antrieb herstellen können. Vorzugsweise kann die Halteeinheit einseitig an dem Aufnahmeabschnitt des Ventilkörpers und einseitig an dem elektromechanischen Antrieb positioniert sein. Der elektromechanische Antrieb ist über die Kraftübertragungseinheit mit einer Welle der Ventilklappe verbunden.

Gemäß einer Ausführungsform ist der elektromechanische Antrieb mit einer elektronischen Steuerung und/oder mit einer Fahrzeugsteuerung koppelbar. Die elektronische Steuerung kann auf den elektromechanischen Antrieb abgestimmt sein und somit eine optimale Steuerung des Antriebs ermöglichen. Die elektronische Steuerung kann vorzugsweise elektrisch unmittelbar mit dem elektromechanischen Antrieb gekoppelt sein. Gemäß einer alternativen oder zusätzlichen Ausgestaltung kann der elektromechanische Antrieb über eine Fahrzeugsteuerung angeschlossen und steuerbar sein. Hierzu kann der elektromechanische Antrieb mit einem CAN (Controller Area Network)-Bus des Fahrzeugs elektronisch verbunden sein, wodurch eine Steuerung und Datenübertragung zwischen der Fahrzeugsteuerung und dem elektromechanischen Antrieb realisiert wird.

Gemäß einer bevorzugten Ausführungsform ist der elektromechanische Antrieb als ein Linearmotor ausgeführt. Hierdurch kann durch eine elektronische Steuerung eine Länge und eine Geschwindigkeit der Längenänderung des Antriebs eingestellt werden. Das Einwirken des Antriebs auf die Ventilklappe kann somit besonders kontrolliert und präzise erfolgen. Insbesondere kann ein lang übersetztes Getriebe entfallen, da eine durch den Linearmotor geleistete Arbeit bzw. Leistung über eine größere Längenänderung gesteigert werden kann.

Das Ventil kann technisch besonders einfach aufgebaut sein, wenn es als eine Absperrklappe ausgestaltet ist. Die Ventilklappe kann hierbei eine elastische oder eine feste Dichtung aufweisen und in einer geschlossenen Stellung mit dem Ventilkörper eine fluiddichte Verbindung eingehen. Ein als eine Absperrklappe ausgestaltetes Ventil kann besonders kompakt ausgeführt sein, wodurch die Auslaufeinrichtung auch bei geringen Platzverhältnissen an unterschiedliche Behälter anbringbar ist.

In einer weiteren vorteilhaften Ausführungsform ist die Kraftübertragungseinheit als ein Lineargetriebe ausgestaltet. Hierdurch kann der elektromechanische Antrieb mit einer Zahnstange gekoppelt sein, welche ein mit der Welle der Ventilklappe verbundenes Zahnrad antreiben kann. Durch eine derartige Kraftübertragungseinheit kann abhängig von der Ausgestaltung des Zahnrads eine einstellbare Kraft auf die Ventilklappe über die Welle übertragen werden.

Nach einem weiteren Aspekt der Erfindung wird ein angetriebenes oder antriebsloses Fahrzeug mit einem Behälter für ein flüssiges, staubförmiges oder körniges Füllgut bereitgestellt. Das Fahrzeug weist eine erfindungsgemäße Auslaufeinrichtung auf, welche an einem Auslaufstutzen des Behälters angeordnet ist.

Des Weiteren kann das Fahrzeug eine elektronische Steuerung des Antriebs der Auflaufeinrichtung und/oder eine CAN-Bus-Verbindung aufweisen. Die CAN-Bus-Verbindung kann direkt mit dem elektromechanischen Antrieb oder indirekt über die elektronische Steuerung des Antriebs erfolgen.

Die Auslaufeinrichtung ist vorzugsweise in Auslaufrichtung des Füllguts dem Auslaufstutzen des Behälters nachgeschaltet und dient insbesondere einem kontrollierten Entladen des Behälters. Aufgrund der kompakten Bauweise der Auslaufeinrichtung kann diese auch bei eingeschränkten Platzverhältnissen am Behälter angeordnet werden. Da die Auslaufeinrichtung lediglich über den Ventilkörper mit dem Auslaufstutzen verbindbar ist, entfallen weitere Befestigungspunkte am Behälter, sodass der Montageaufwand reduziert wird.

Nachstehend werden mehrere Ausführungsbeispiele der Erfindung anhand der Zeichnungen näher erläutert. Es zeigen:
Fig. 1 eine perspektivische Darstellung einer Auslaufeinrichtung gemäß einer Ausführungsform der Erfindung,
Fig. 2 eine schematische Darstellung eines elektromechanischen Antriebs mit einer Kraftübertragungseinrichtung und einer Halteeinheit gemäß einer weiteren Ausführungsform der Erfindung, und
Fig. 3 eine schematische Seitenansicht eines Fahrzeugs mit einer Auslaufeinrichtung gemäß einer Ausführungsform der Erfindung.

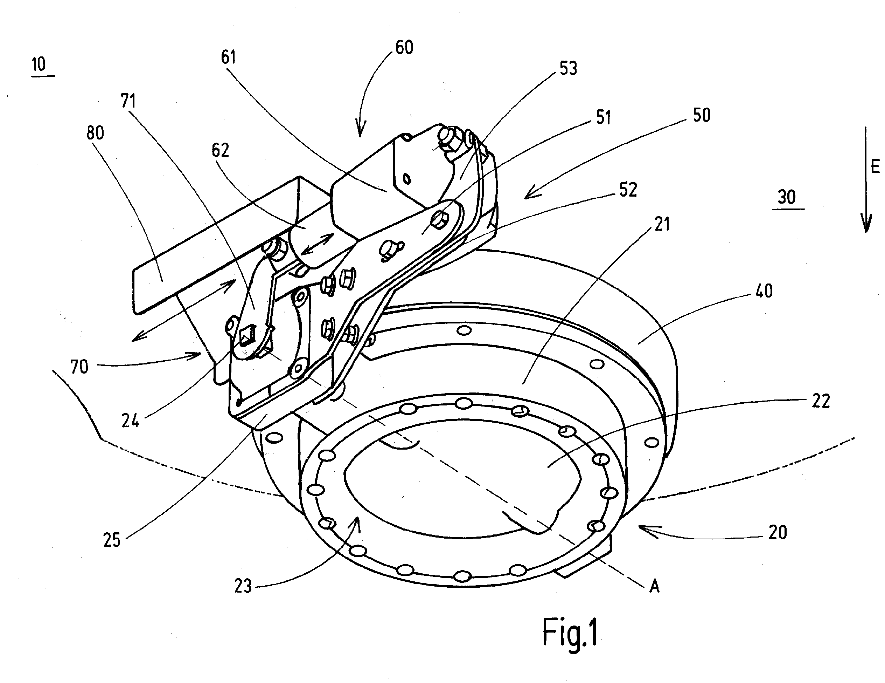

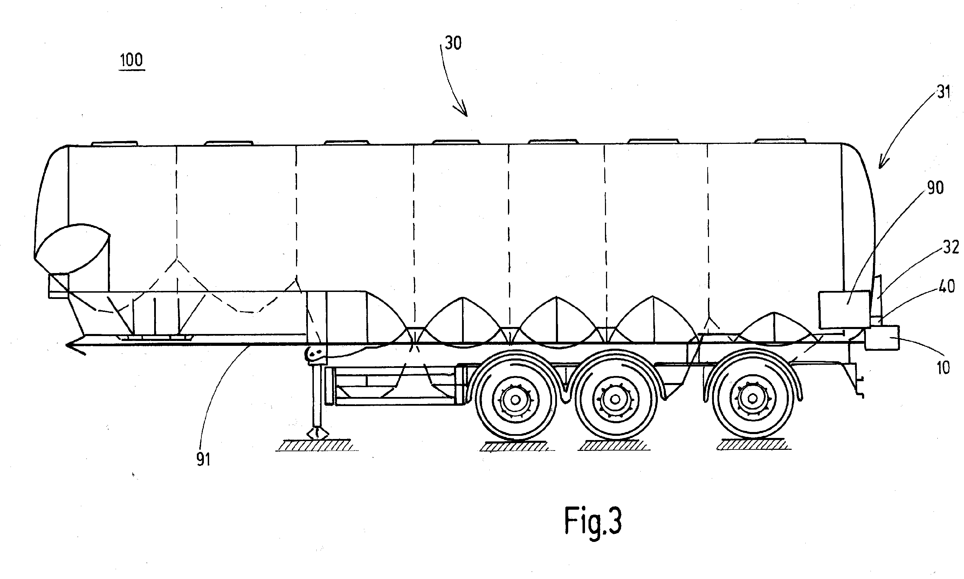

Die Fig. 1 zeigt eine perspektivische Darstellung einer Auslaufeinrichtung 10 gemäß einer Ausführungsform der Erfindung. Die Auslaufeinrichtung 10 ist beispielsweise dazu ausgestaltet, an einem, in Fig. 3 dargestellten, Silofahrzeug 100 montiert zu werden.

Die Auslaufeinrichtung 10 weist ein Ventil 20 mit einem Ventilkörper 21 und einer Ventilklappe 22 auf. Das Ventil 20 ist in einer Schließstellung dargestellt. Der Ventilkörper 21 bildet eine runde Auslauföffnung 23 aus, in welcher die Ventilklappe 22 an einer Welle 24 um eine Drehachse A schwenkbar angeordnet ist. Hierzu ist die Ventilklappe 22 derart ausgeformt, dass sie die Auslauföffnung 23 in der Schließstellung fluiddicht abdichtet. Im Bereich der Welle 24 ist die Ventilklappe 22 strukturell verstärkt. Gemäß dem Ausführungsbeispiel ist die Welle 24 nicht durchgängig ausgeführt, sondern ragt beidseitig durch den Ventilkörper 21 in die Ventilklappe 22 hinein.

Zum Veranschaulichen der Montage der Auslaufeinrichtung 10 ist ein Behälter 30 mit einem Auslaufstutzen 40 dargestellt. Der Ventilkörper 21 ist mit dem Auslaufstutzen 40 verschraubt. Hierdurch ist die gesamte Auslaufeinrichtung 10 über den Ventilkörper 21 an dem Auslaufstutzen 40 angeschlossen.

An einem Aufnahmeabschnitt 25 des Ventilkörpers 21 ist eine Halteeinheit 50 angeordnet. Gemäß dem Ausführungsbeispiel ist die Halteeinheit 50 mehrteilig ausgeführt und mit dem Aufnahmeabschnitt 25 durch Schraubverbindungen befestigt. Die Welle 24 verläuft durch den Aufnahmeabschnitt 25 hindurch.

Die Halteeinheit 50 erstreckt sich von dem Aufnahmeabschnitt 25 aus senkrecht zur Drehachse A und dient zum ortsfesten Verbinden eines elektromechanischen Antriebs 60. Hierzu weist die Halteeinheit 50 eine vorderseitige Haltelasche 51 und eine rückseitige Haltelasche 52 auf, welche gemeinsam mit dem Aufnahmeabschnitt 25 des Ventils 20 verbunden sind und parallel zueinander verlaufen. An einem dem Aufnahmeabschnitt 25 entgegengesetzten Ende der Haltelaschen 51, 52 sind diese mit einem Halteblech 53 verbunden, welches in einem 90° Winkel entgegen einer Auslaufrichtung E verläuft. Das Halteblech 53 nimmt endseitig den elektromechanischen Antrieb 60 auf.

Der elektromechanische Antrieb 60 ist schwenkbar mit dem Halteblech 53 verschraubt und ist als ein Linearmotor ausgeführt, welcher einen stationären Motorabschnitt 61 bzw. einen mit dem Halteblech 53 verbundenen Stator und einen ausfahrbaren Motorabschnitt 62 bzw. einen Läufer aufweist. Der Läufer 62 ist endseitig mit einer Kraftübertragungseinheit 70 verbunden. Die Kraftübertragungseinheit 70 ist als ein Hebel 71 ausgeführt. Der Hebel 71 ist mit der Welle 24 verdrehsicher gekoppelt und kann über den Läufer 62 angesteuert werden.

Die Haltelaschen 51, 52, das Halteblech 53, der elektromechanische Antrieb 60 und der Hebel 71 sind kreisförmig an der Welle 24 und dem Aufnahmeabschnitt 25 angeordnet.

Die Kraftübertragungseinheit 70 wird hier durch ein Abdeckblech 80 bedeckt.

Die Pfeile veranschaulichen die mögliche Bewegung des Linearmotors 60 und des Hebels 71 zum Öffnen und Schließen der Ventilklappe 22.

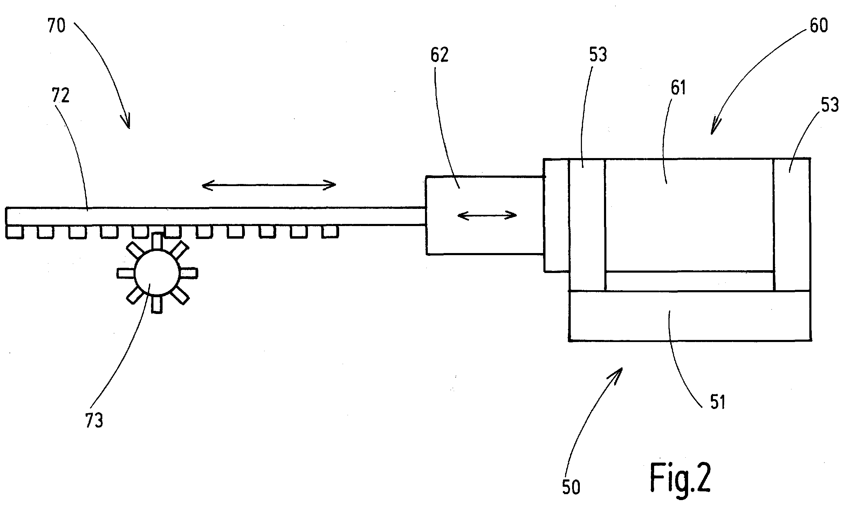

In Fig. 2 ist eine schematische Darstellung eines elektromechanischen Antriebs 60 mit einer Kraftübertragungseinrichtung 70 und einer Halteeinheit 50 gemäß einer weiteren Ausführungsform der Erfindung gezeigt. Der Linearmotor 60 ist hier über zwei Haltebleche 53 mit einer Haltelasche 51 verbunden, welche den Stator 61 des Linearmotors 60 am Aufnahmeabschnitt 25 befestigen kann. Der Läufer 62 ist gemäß der Ausführungsform mit einer Zahnstange 72 verbunden und kann diese linear bewegen. Die Bewegung wird durch die Pfeile verdeutlicht. Die Zahnstange 72 kann mit einem Zahnrad 73 wechselwirken, welches mit der Welle 24 gekoppelt ist. Durch eine derartige Kraftübertragungseinheit 70 kann die lineare Bewegung des Läufers 62 auf die Welle 24 übertragen werden.

Die Fig. 3 zeigt eine schematische Seitenansicht eines Fahrzeugs 100 mit einer Auslaufeinrichtung 10 gemäß einer Ausführungsform der Erfindung. Das Fahrzeug 100 ist als ein antriebsloses Fahrzeug 100, insbesondere als ein Silofahrzeug, ausgeführt. Das Fahrzeug 100 ist ein Sattelauflieger und weist einen länglichen Behälter 30 auf. An einem Ende 31 des Behälters 30 ist ein Auslauf 32 ausgebildet. Der Auslauf 32 mündet in einem Auslaufstutzen 40. An dem Auslaufstützen 40 ist die Auslaufeinrichtung 10 befestigt.

Das Fahrzeug 100 weist eine elektronische Steuerung 90 des elektro-mechanischen Antriebs 60 der Auslaufeinrichtung 10 auf. Diese kann in Form eines Bedienfelds ausgeführt sein. Des Weiteren weist das Fahrzeug 100 eine CAN-Bus-Verbindung 91 auf, welche ebenfalls mit dem elektromechanischen Antrieb 60 verbunden ist. Die CAN-Bus-Verbindung 91 kann dazu eingesetzt werden, die Auslaufeinrichtung 10 über eine nicht dargestellte Fahrzeugsteuerung zu betätigen.

### Bezugszeichenliste

- 100: Fahrzeug

- 10: Auslaufeinrichtung

- 20: Ventil
- 21: Ventilkörper
- 22: Ventilklappe
- 23: Auslauföffnung
- 24: Welle
- 25: Aufnahmeabschnitt

- 30: Behälter
- 31: hinteres Ende des Behälters
- 32: Auslauf des Behälters

- 40: Auslaufstutzen

- 50: Halteeinheit
- 51: vorderseitige Haltelasche
- 52: rückseitige Haltelasche
- 53: Halteblech

- 60: elektromechanischer Antrieb
- 61: stationärer Motorabschnitt / Stator
- 62: ausfahrbarer Motorabschnitt / Läufer

- 70: Kraftübertragungseinheit
- 71: Hebel
- 72: Zahnstange
- 73: Zahnrad

- 80: Abdeckblech
- 90: elektronische Steuerung
- 91: CAN-Bus-Verbindung

- A: Drehachse
- E: Auslaufrichtung

## Patentansprüche

1. Auslaufeinrichtung (10) für einen Auslaufstutzen (40) eines Behälters (30) für ein flüssiges, staubförmiges oder körniges Füllgut, aufweisend ein Ventil (20) mit einem Ventilkörper (21), welcher mit dem Auslaufstutzen (40) verbindbar ist, und einer Ventilklappe (22) zum Verschließen einer Auslauföffnung (23) des Ventilkörpers (21), wobei die Auslaufeinrichtung (21) mindestens einen elektromechanischen Antrieb (60) aufweist, wobei eine Stellung der Ventilklappe (22) durch den elektromechanischen Antrieb (60) über eine Kraftübertragungseinheit (70) veränderbar ist, wobei der elektromechanische Antrieb (60) über die Kraftübertragungseinheit (70) mit einer Welle (24) der Ventilklappe (22) verbunden ist **dadurch gekennzeichnet, dass** die Auslaufeinrichtung (10) eine mit dem Ventilkörper (21) verbindbare Halteeinheit (50) zum Aufnehmen des elektromechanischen Antriebs (60) aufweist, wobei die Kraftübertragungseinheit (70) als ein Hebel (71) ausgestaltet ist, wobei der elektromechanische Antrieb (60) einseitig schwenkbar an der Halteeinheit (50) und einseitig mit dem Hebel (71) verbunden ist.

2. Auslaufeinrichtung nach Anspruch 1, wobei die Halteeinheit (50) einteilig oder mehrteilig ausgebildet ist.

3. Auslaufeinrichtung nach Anspruch 1 oder 2, wobei der elektromechanische Antrieb (60) mit einer elektronischen Steuerung (90) und/oder mit einer Fahrzeugsteuerung koppelbar ist.

4. Auslaufeinrichtung nach einem der Ansprüche 1 bis 3, wobei der elektromechanische Antrieb (60) ein Linearmotor ist.

5. Auslaufeinrichtung nach einem der Ansprüche 1 bis 4, wobei das Ventil (20) als eine Absperrklappe ausgestaltet ist.

6. Auslaufeinrichtung nach einem der Ansprüche 1 bis 5, wobei die Kraftübertragungseinheit (70) als ein Lineargetriebe (72, 73) ausgestaltet ist.

7. Angetriebenes oder antriebsloses Fahrzeug (100) mit einem Behälter (30) für ein flüssiges, staubförmiges oder körniges Füllgut, wobei eine Auslaufeinrichtung (10) nach einem der vorhergehenden Ansprüche an einem Auslaufstutzen (40) des Behälters (30) angeordnet ist.

## Claims

1. Outlet device (10) for an outlet nozzle (40) of a container (30) for a liquid, dusty or granular filling material, having a valve (20) with a valve body (21) which can be connected to the outlet nozzle (40), and a valve flap (22) for closing an outlet opening (23) of the valve body (21), wherein the outlet device (10) has at least one electromechanical drive (60), wherein a position of the valve flap (22) can be changed by the electromechanical drive (60) via a power transmission unit (70), wherein the electromechanical drive (60) is connected to a shaft (24) of the valve flap (22) via the power transmission unit (70), **characterized in that** the outlet device (10) has a holding unit (50) which can be connected to the valve body (21) for receiving the electromechanical drive (60), wherein the power transmission unit (70) is configured as a lever (71), wherein the electromechanical drive (60) is pivotable on one side on the holding unit (50) and is connected on one side to the lever (71).

2. Outlet device according to claim 1, wherein the holding unit (50) is configured in one piece or in several pieces.

3. Outlet device according to claim 1 or 2, wherein the electromechanical drive (60) can be coupled to an electronic controller (90) and/or to a vehicle controller.

4. Outlet device according to one of claims 1 to 3, wherein the electromechanical drive (60) is a linear motor.

5. Outlet device according to one of claims 1 to 4, wherein the valve (20) is configured as a shut-off valve.

6. Outlet device according to one of claims 1 to 5, wherein the power transmission unit (70) is configured as a linear gear (72, 73).

7. Driven or non-driven vehicle (100) with a container (30) for a liquid, dusty or granular filling material, wherein an outlet device (10) according to one of the preceding claims is arranged on an outlet nozzle (40) of the container (30).

## Revendications

1. Dispositif d'écoulement (10) pour une tubulure d'écoulement (40) d'un conteneur (30) pour un produit de remplissage liquide, pulvérulent ou granuleux, comportant une vanne (20) avec un corps de vanne (21), lequel peut être relié à la tubulure d'écoulement (40) et un clapet de vanne (22) pour fermer une ouverture d'écoulement (23) du corps de vanne (21), sachant que le dispositif d'écoulement (10) comporte au moins un entraînement électromécanique (60), sachant qu'une position du clapet de vanne (22) peut être modifiée par l'entraînement électromécanique (60) par le biais d'une unité de transmission de force (70), sachant que l'entraînement électromécanique (60) est relié par le biais de l' unité de transmission de force (70) à un axe (24) du clapet de vanne (22), **caractérisé en ce que** le dispositif d'écoulement (10) comporte une unité de maintien (50) pouvant être reliée au corps de vanne (21) pour loger l'entraînement électromécanique (60), sachant que l' unité de transmission de force (70), est constituée sous la forme d'un levier (71), sachant que l'entraînement électromécanique (60) est relié pouvant pivoter d'un côté sur l'unité de maintien (50) et d'un côté avec le levier (71).

2. Dispositif d'écoulement selon la revendication 1, sachant que l'unité de maintien (50) est constituée en une seule pièce ou en plusieurs pièces.

3. Dispositif d'écoulement selon la revendication 1 ou la revendication 2, sachant que l'entraînement électromécanique (60) peut être couplé à une commande électronique (90) et/ou à une commande de véhicule.

4. Dispositif d'écoulement selon l'une quelconque des revendications 1 à 3, sachant que l'entraînement électromécanique (60) est un moteur linéaire.

5. Dispositif d'écoulement selon l'une quelconque des revendications 1 à 4, sachant que la vanne (20) est constituée en tant qu'un clapet d'arrêt.

6. Dispositif d'écoulement selon l'une quelconque des revendications 1 à 5, sachant que l'unité de transmission de force (70) est constituée sous la forme d'un mécanisme de transmission linéaire (72, 73).

7. Véhicule entraîné ou sans entraînement (100) avec un conteneur (30) pour un produit de remplissage liquide, pulvérulent ou granuleux, sachant qu'un dispositif d'écoulement (10) est disposé sur une tubulure d'écoulement (40) du conteneur (30) selon l'une quelconque des revendications précédentes.
